# EUROPÄISCHE PATENTSCHRIFT

(11) **EP 0 996 207 B1**
(45) Veröffentlichungstag und Bekanntmachung des Hinweises auf die Patenterteilung: **09.02.2005**
(21) Anmeldenummer: 99120060.1
(22) Anmeldetag: 19.10.1999
(51) Int. Cl.: H02B 1/44

(54) **Wandverteilergehäuse für lokale elektrische Netzwerke**
Wall mounted distribution casing for local electrical network
Armoire de distribution murale pour réseau électrique local

(30) Priorität: 20.10.1998 DE 29818634 U
(43) Veröffentlichungstag der Anmeldung: 26.04.2000
(73) Patentinhaber: apra-gerätebau Dipl.-Ing.(FH) Wolgang Appenzeller und Wilfried Rademacher GmbH & Co.KG, 54550 Daun/Vulkaneifel (DE)
(72) Erfinder: Weber, MichaelDipl.-Ing., 54528 Salmtal (DE)
(74) Vertreter: Boecker, Joachim, Dr.-Ing.

(56) Entgegenhaltungen:
- FR-A- 576 934
- US-A- 4 003 610
- US-A- 4 466 676

## Beschreibung

Die Erfindung betrifft ein Wandverteilergehäuse für lokale elektrische Netzwerke gemäß dem Oberbegriff des Anspruches 1 (siehe US-A-4 466 676).

Es sind genormte Wandverteilergehäuse bekannt, bei denen der Innenraum eine Einbaubreite von beispielsweise 19 Zoll hat und in denen eine Anzahl von 19-Zoll-Einbauebenen übereinander und/oder nebeneinander vorhanden sind. In die Einbauebenen sind mit aktiven und/oder passiven elektrischen Komponenten bestückte Einschübe einsetzbar. Die Höhe des Innenraums der Wandverteilergehäuse beträgt ein ganzes Vielfaches einer sogenannten Höheneinheit HE, wobei die einzelnen Einschübe eine, zwei oder mehrere Höheneinheiten einnehmen können. Die 19-Zoll-Befestigungsebene liegt in der Regel parallel zur vertikalen Befestigungswand, kann aber auch senkrecht zu dieser liegen.

Die in den Wandverteilergehäusen vorhandenen Einschübe müssen zwecks Veränderung der elektrischen Verknüpfungen zwischen den Einschüben von der Frontseite (19-Zoll-Ebene) zugänglich sein. Ferner müssen die von den Einschüben getragenen elektrischen Baugruppen und Komponenten zwecks Montage, Wartung und Reparatur weitergehend zugänglich sein.

Zu diesem Zweck sind sogenannte dreiteilige Wandverteilergehäuse bekannt, die mit ihrer Rückwand fest an einer Befestigungswand befestigt sind, während sich der gesamte restliche Teil des Gehäuses mit Inhalt über eine an der Rückwand vorhandene Schwenkachse von der Befestigungswand wegschwenken läßt. Das dritte Teil bei dieser Befestigungsart bildet die Fronttür. Nachteilig bei dieser Ausführungsform ist, daß die durch die Rückseite des Gehäuses zugeführten Kabel imstande sein müssen, der genannten Schwenkbewegung zu folgen, was eine sehr exakte Verlegung der Kabel erfordert und insbesondere bei hochwertigen Verkabelungssystemen mit lichtleitenden Glasfaserkabeln eine starke Beanspruchung der Kabel bedeutet.

Bekannt ist auch ein Wandverteilergehäuse, dessen Rückwand mit dem 19-Zoll-Rahmen, von dem die Einschübe getragen werden, an einer Wand befestigt und gehalten wird, während alle anderen Wände des Gehäuses ein einheitliches haubenförmiges abnehmbares Verkleidungsteil bilden, so daß die im Gehäuse befindlichen Baugruppen und Komponenten frei zugänglich gemacht werden können. Diese Konstruktion leidet unter einer verminderten mechanischen Stabilität, da das eigentliche Gehäuse, also die Haube, selbst keine tragende Funktion übernimmt.

Der Erfindung liegt die Aufgabe zugrunde, ein Wandverteilergehäuse der eingangs genannten Art zu entwickeln, welches einen guten Zugang zu den im Gehäuse untergebrachten Komponenten ermöglicht, eine einfache und belastungsfreie Verlegung der Kabel gestattet und eine gute mechanischen Stabilität hat.

Zur Lösung dieser Aufgabe wird ein Wandverteilergehäuse gemäß dem Oberbegriff des Anspruches 1 vorgeschlagen, welches erfindungsgemäß die im kennzeichnenden Teil des Anspruches 1 genannten Merkmale hat.

Weitere Ausgestaltungen der Erfindung sind in den Unteransprüchen genannt.

Anhand des in den Figuren gezeigten Ausführungsbeispiels soll die Erfindung näher erläutert werden. Es zeigen
- Figur 1: in perspektivischer Darstellung ein Wandverteilergehäuse gemäß der Erfindung mit geschlossener Fronttür,
- Figur 2: in perspektivischer Darstellung das Wandverteilergehäuse der Figur 1 mit geöffneter Fronttür.

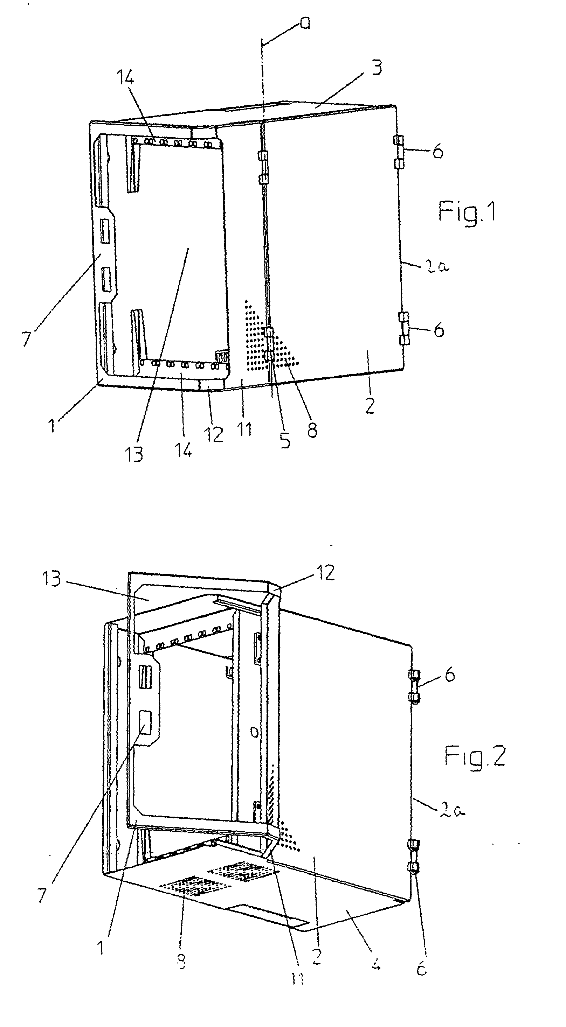

Die Figuren 1 und 2 zeigen ein Ausführungsbeispiel eines Wandverteilergehäuses gemäß der Erfindung. In Figur 1 sind die Vorderwand 1, eine vertikale Seitenwand 2 und die obere horizontale Seitenwand 3 des im wesentlichen quaderförmigen Gehäuses sichtbar. Das Gehäuse wird vorzugsweise mit seiner nicht sichtbaren Rückwand an einer nicht dargestellten Befestigungswand befestigt. Die Vorderwand ist als Fronttür 1 ausgebildet, die mittels Scharnieren 5 an der Seitenwand 2 schwenkbar befestigt ist. Diese Seitenwand 2 ist ebenfalls als Tür, der Seitentür, ausgebildet und mittels Scharnieren 6 an der Rückwand des Gehäuse schwenkbar befestigt. Die Befestigung der Seitentür 2 kann auch an der oberen 3 und unteren 4 horizontalen Seitenwand erfolgen. Die Fronttür ist mit einem Handgriff 7 versehen.

Figur 2 zeigt das Wandverteilergehäuse perspektivisch von unterhalb und mit teilweise geöffneter Fronttür 1.

In dem gezeigten Ausführungsbeispiel ist die Fronttür 1 längs der Seite, an der sie schwenkbar angeschlagen ist, mit einer streifenförmigen Abwinkelung 11 versehen, und die Verbindung zwischen dieser Abwinkelung 11 und und dem Hauptteil der Tür 1 erfolgt über einen Zwischenstreifen 12, der vorzugsweise unter 45 Grad zu der Abwinkelung 11 und dem Hauptteil der Fronttür 1 verläuft. Die obere und untere horizontale Seitenwand 3, 4 sind dem abgewinkelten Verlauf der Fronttür angepaßt.

Ferner ist die Fronttür 1 mit einer Sichtscheibe 13 versehen, die sich bis in den abgewinkelten Bereich 12, 13 der Fronttür 1 erstreckt. Durch die Sichtscheibe erkennt man oben und unten Befestigungsschienen 14, die im Ausführungsbeispiel im 19-Zoll-Raster ausgeführt sind. Zwischen diesen Schienen werden die Einschübe befestigt. Die Einschübe verlaufen also bei dem gezeigten Ausführungsbeispiel mit ihren Montageebenen vertikal. Es ist aber auch möglich, die Befestigungsschienen vertikal anzuordnen, so daß die Einschübe mit ihren Montageebenen horizontal verlaufen. Natürlich dürfen im letztgenannten Falle keine Befestigungsschienen an der ausschwenkbaren Seitenwand 2 befestigt werden; sie können beispielsweise zwischen der oberen und unteren vertikalen Seitenwand befestigt werden. Durch Öffnen der Fronttür 1 ist die Befestigungsebene zugänglich, an der häufig durch Änderung der Querverbindungen zwischen den einzelnen Einschüben Umstrukturierungen vorzunehmen sind.

Nach Öffnen der Fronttür 1 kann die Seitentür 2 entriegelt und ebenfalls geöffnet werden. Die Öffnung der Seitentür ist erforderlich für Installations-, Wartungs- und Reparturarbeiten an den im Inneren des Gehäuses befindlichen Komponenten. Es kann vorgesehen sein, daß die Seitentür mit einem Verschlußmechanismus versehen ist, zu dessen Öffnung ein anderer Schlüssel erforderlich ist als für die Öffnung der Fronttür. So können unterschiedlich autorisierte Zugänglichkeiten festgelegt werden.

Die Scharniere 5 und 6 sind so ausgebildet, daß die an ihnen befestigte Tür sich vorzugsweise um 270 Grad öffnen läßt. Dies ist insbesondere für die Fronttür 1 wünschenswert. Für die Seitentür 2 bringt eine weitere Öffnung als 90 Grad nur dann einen Vorteil, wenn das Wandverteilergehäuse an einem Pfosten oder an der Ecke einer Wand befestigt ist.

Zur Belüftung des Innenraumes des Wandverteilergehäuses können Belüftungsgitter an verschiedenen Seitenwänden vorgesehen sein.

Das Wandverteilergehäuse gemäß der Erfindung kann mit seiner Rückwand oder der nicht als Tür ausgebildeten seitlichen Wand an einer Befestigungswand befestigt werden.

In den meisten Fällen liegen die Fronttür und die Seitentür in vertikalen Ebenen und werden um vertikale Ebenen verschwenkt. Grundsätzlich ist es aber auch möglich, daß die Frontseite und die obere oder untere Seitenwand als Türen ausgebildet sind, wobei diese dann um horizontale Achsen schwenkbar sind.

## Patentansprüche

1. Wandverteilergehäuse für lokale elektrische Netzwerke, welches Gehäuse genormte Abmessungen, zum Beispiel gemäß der 19-Zoll-Technik, aufweist zur Aufnahme von Einschüben mit Bauteilen für elektrische Netzwerke in über- oder nebeneinander liegenden Einbauebenen, wobei das Gehäuse mit einer senkrecht zur Einschubrichtung der Einschübe orientierten, vertikal oder horizontal angeschlagenen Fronttür (1) versehen ist, **dadurch gekennzeichnet, daß** die Fronttür (1) an der ihrer Schwenkachse (a) benachbarten vertikalen oder horizontalen Seitenwand (2) schwenkbar befestigt ist und daß diese Seitenwand (2) ihrerseits als Seitentür (2) ausgebildet ist, die an derjenigen Seite (2a) vertikal beziehungsweise horizontal angeschlagen ist, die der Seite, an der sich die Schwenkachse (a) der Fronttür befindet, gegenüberliegt.

2. Wandverteilergehäuse nach Anspruch 1, **dadurch gekennzeichnet, daß** die Fronttür (1) und/oder die Seitentür (2) sich um 270 Grad oder annähernd 270 Grad schwenken lassen.

3. Wandverteilergehäuse nach Anspruch 1 oder 2, **dadurch gekennzeichnet, daß** die Seitentür sich nur bei geöffneter Fronttür öffnen läßt.

4. Wandverteilergehäuse nach Anspruch 3, **dadurch gekennzeichnet, daß** zum Öffnen des Verschlußmechanismus der Seitentür (2) andere Mittel, zum Beispiel ein anderer Schlüssel, erforderlich sind als zum Öffnen des Verschlußmechanismus der Fronttür (1).

5. Wandverteilergehäuse nach einem der vorhergehenden Ansprüche, **dadurch gekennzeichnet, daß** die Fronttür (1) an ihrer Anschlagseite eine streifenförmige Abwinkelung (11) aufweist, die einen Teil der Seitenwand bildet und mit der die Fronttür an der Seitentür (2) über Scharniere (5) befestigt ist.

6. Wandverteilergehäuse nach einem der vorhergehenden Ansprüche, **dadurch gekennzeichnet, daß** der Übergang zwischen dem Hauptteil der Fronttür (1) und ihrer streifenförmige Abwinkelung (11) über einen Zwischenstreifen (12) erfolgt, der vorzugsweise unter 45 Grad zum Hauptteil der Fronttür und zu der streifenförmigen Abwinkelung (11) der Fronttür verläuft.

7. Wandverteilergehäuse nach einem der vorhergehenden Ansprüche, **dadurch gekennzeichnet, daß** in der Fronttür und/oder der Seitentür eine Sichtscheibe (13) eingesetzt ist, die sich vorzugsweise auch über den genannten abgewinkelten Teil (11,12) der Fronttür erstreckt.

8. Wandverteilergehäuse nach einem der Ansprüche 5 bis 7, **dadurch gekennzeichnet, daß** die obere und untere Seitenwand (3,4) dem abgewinkelten Verlauf der Fronttür (1) angepaßt sind.

## Claims

1. Wall distributor cabinet for local electrical networks which cabinet exhibits standardised dimensions, such as according to the 19-inch-technique, for accommodating plug-in units with components for electrical networks on mounting levels arranged above one another or side by side, said cabinet being provided with a front door (1) arranged perpendicular to the plug-in direction of the plug-in units and being hingedly connected to a vertically or horizontally extending edge of the cabinet, **characterized in that** said front door (1) is hingedly connected to the vertical or horizontal side wall (2) adjacent to its swivelling axis (a) and that this side wall (2) on its turn is formed as a side door (2) which is vertically or horizontally respectively hingedly connected to that side (2a), which is positioned opposite to the side to which the swivelling axis (a) of the front door is connected.

2. Wall distributor cabinet according to claim 1, **characterized in that** said front door (1) and/or said side door (2) is swivelling around 270 or nearly 270 degrees.

3. Wall distributor cabinet according to claim 1 or 2, **characterized in that** the side door can only be opened when the front door is open.

4. Wall distributor cabinet according to claim 3, **characterized in that** for unlocking the locking device of the side door (2) different means, for example a different key, is required than for unlocking the locking device of the front door (1).

5. Wall distributor cabinet according to any of the preceding claims, **characterized in that** the front door (1) is provided on its hingedly connected side with a strip-like bent-off portion (11) which forms part of the side wall and via which the front door is connected to the side door (2) by means of hinges.

6. Wall distributor cabinet according to any of the preceding claims, **characterized in that** the transition between the main part of the front door (1) and its bent-off strip-like portion (11) occurs via an intermediate strip (12) which is preferably oriented under 45 degrees with respect to the main part of the front door and the bent-off strip-like portion (11) of the front door.

7. Wall distributor cabinet according to any of the preceding claims, **characterized in that** the front door and/or the side door are/is provided with an inspection glass (13) which extends preferably over said bent-off portion (11,12) of the front door.

8. wall distributor cabinet according to any of claims 5 - 7, **characterized in that** the top wall (3) and the bottom wall (4) are adjusted to the bent-off shape of the front door (1).

## Revendications

1. Armoire de distribution murale pour réseaux électriques locaux, dont l'armoire comporte des dimensions normalisées, par exemple suivant la technique 19 pouces, pour la réception de tiroirs comportant des composants pour des réseaux électriques locaux à des niveaux d'encastrement superposés ou disposés côte à côte, l'armoire étant munie d'une porte (1 ) frontale orientée perpendiculairement par rapport à la direction d'insertion des tiroirs, arrêtés verticalement ou horizontalement, **caractérisée en ce que** la porte (1 ) frontale est fixée de manière à pouvoir pivoter à la paroi (2) latérale verticale ou horizontale voisine de son axe (a) de pivotement et **en ce que** la paroi (2) latérale est réalisée pour sa part en porte (2) latérale qui est arrêtée verticalement ou horizontalement de son côté (2a) qui fait face au côté sur lequel se trouve l'axe (a) de pivotement de la porte frontale.

2. Armoire de distribution murale suivant la revendication 1, **caractérisée en ce que** la porte (1 ) frontale et/ou la porte (2) latérale peuvent pivoter de 270 degrés ou à peu près 270 degrés.

3. Armoire de distribution murale suivant la revendication 1 ou 2, **caractérisée en ce que** la porte latérale ne peut être ouverte que lorsque la porte frontale est ouverte.

4. Armoire de distribution murale suivant la revendication 3, **caractérisée en ce que**, pour ouvrir le mécanisme de verrouillage de la porte (2) latérale, d'autres moyens que ceux pour ouvrir le mécanisme de verrouillage de la porte (1) frontale sont nécessaires, par exemple une autre clé.

5. Armoire de distribution murale suivant l'une des revendications précédentes, **caractérisée en ce que** la porte (1) frontale comporte sur sa face d'arrêt une partie (11) coudée en forme de bande qui forme une partie de la paroi latérale et par laquelle la porte frontale est fixée à la porte (2) latérale par l'intermédiaire de charnières (5).

6. Armoire de distribution murale suivant l'une des revendications précédentes, **caractérisée en ce que** la transition entre la partie principale de la pièce (1) frontale et sa partie (11) coudée en forme de bande s'effectue par l'intermédiaire d'une bande (12) intermédiaire qui s'étend, de préférence, en faisant un angle de 45 degrés par rapport à la partie principale de la porte frontale et par rapport à la partie (11) coudée en forme de bande.

7. Armoire de distribution murale suivant l'une des revendications précédentes, **caractérisée en ce qu'**il est inséré dans la porte frontale un hublot (13) qui s'étend, de préférence, aussi sur la partie (11, 12) coudée précitée.

8. Armoire de distribution murale suivant l'une des revendications 5 à 7, **caractérisée en ce que** les parois (3, 4) supérieure et inférieure sont adaptées au tracé coudé de la porte (1) frontale.
